# EUROPEAN PATENT APPLICATION

(11) **EP 4 484 594 A1**
(43) Date of publication of application: **01.01.2025**
(21) Application number: 23760087.9
(22) Date of filing: 24.02.2023
(51) Int. Cl.: C22C 9/01

(54) **USE OF ALUMINUM-COPPER ALLOY AS HYDROGEN DEVICE, AND HYDROGEN-RESISTANT MEMBER FOR HYDROGEN DEVICE AND METHOD FOR USING SAME**

(30) Priority: 25.02.2022 JP 2022027874
(71) Applicant: Takatori Seisakusho Co., Ltd., Ukiha-shi, Fukuoka 839-1321 (JP); Fukuoka University, Fukuoka 814-0180 (JP)
(72) Inventor: FUJIYAMA, Kojiro, Ukiha-shi, Fukuoka 839-1321 (JP); YAMABE, Junichiro, Fukuoka-shi, Fukuoka 814-0180 (JP); WADA, Kentaro, Fukuoka-shi, Fukuoka 814-0180 (JP)
(74) Representative: Hasegawa, Kan
(86) International application number: PCT/JP2023/006647
(87) International publication number: WO 2023/163088

(57) **Abstract**

Provided is a novel hydrogen-resistant member for hydrogen equipment, which has excellent hydrogen embrittlement resistance and tensile strength. A hydrogen-resistant member for hydrogen equipment, the member being made of an aluminum-copper alloy containing Cu as a base material and Al in a second largest amount after Cu. The hydrogen-resistant member has excellent hydrogen embrittlement resistance and tensile strength and can be suitably used, for example, as a hydrogen-resistant member for hydrogen equipment, such as a container, a heat exchanger, a pipe, a valve, a seal portion, and a strainer, that is used in a state of contact with hydrogen.

## Description

### Technical Field

### Reference to Related Application

The present application claims the benefit of and priority to Japanese Patent Application (JP 2022-027874) filed on February 25, 2022. Priority is explicitly claimed to the patent application described above, the entire disclosure of which is incorporated in the present specification by reference for all purposes.

The present invention relates to use of an aluminum-copper alloy as hydrogen equipment (equipment for storing or transporting hydrogen and used in a state of contact with hydrogen), and a hydrogen-resistant member and a method of using a hydrogen-resistant member.

### Background Art

In recent years, as the introduction and spread of clean energy are indispensable for the global transition to a decarbonized society, hydrogen-related technologies have attracted attention. Fuel cell vehicles (FCVs) powered by a fuel cell using hydrogen as a fuel have already been put on the market, and use of fuel cells in trucks, buses, ships, and the like is expected to increase and spread in the future. In addition, to expand the use of fuel cell vehicles, provision of infrastructure, such as a hydrogen station for supplying hydrogen, will be required.

Fuel cell vehicles require a high-pressure hydrogen fuel tank (from about 35 to about 70 MPa), such as a 35 MPa or 70 MPa tank, to ensure driving distance similar to that of gasoline. In addition, hydrogen stations for supplying hydrogen to FCVs need to handle higher-pressure hydrogen, such as 45 MPa or 90 MPa, to supply such high-pressure hydrogen.

For hydrogen equipment using high-pressure hydrogen for fuel cell vehicles, hydrogen stations, and the like, a constituent member to be in direct contact with hydrogen is indispensable. Use of a constituent member made of a metal under hydrogen causes a problem that hydrogen penetrates into the metal and the hydrogen that has penetrated causes "hydrogen embrittlement", which reduces tensile strength, elongation, reduction in area, or the like of the metal.

At present, metallic materials that can be used for high-pressure hydrogen in Japan are only nickel equivalent products of a stable austenitic stainless steel (SUS316 or SUS316L) with a specified nickel amount and an aluminum-based alloy 6061-T6 (only 35 MPa FCV). In this connection, austenitic stainless steels (e.g., Patent Literatures 1 and 2), an aluminum-based alloy (e.g., Patent Literature 3), and the like have been developed as metallic materials for high-pressure hydrogen. In addition, Patent Literature 4 reports a hydrogen-resistant member made of a beryllium-copper alloy with a specific composition as a few examples in which a copper-based alloy is used in a constituent member for hydrogen equipment.

### Citation List

### Patent Literature

Patent Literature 1: JP 2019-44204 A
Patent Literature 2: JP 2018-135592 A
Patent Literature 3: JP 2021-188102 A
Patent Literature 4: JP 2017-145472 A

### Summary of Invention

### Technical Problem

As constituent members of hydrogen equipment, stable austenitic stainless steels and aluminum-based alloys have excellent hydrogen embrittlement resistance but have problems of low tensile strength and high prices.

In addition, the hydrogen-resistant member made of a beryllium-copper alloy disclosed in Patent Literature 3 has advantages of excelling hydrogen embrittlement resistance and exhibiting high tensile strength. However, for beryllium-copper alloys, beryllium itself is toxic. Thus, there is room for improvement in terms of developing beryllium-free materials. Thus, it is desired to develop a hydrogen-resistant member made of a new copper-based alloy with excellent hydrogen embrittlement resistance and tensile strength to replace a beryllium-copper alloy.

Under such circumstances, an object of the present invention is to provide a new hydrogen-resistant member for hydrogen equipment with excellent hydrogen embrittlement resistance and tensile strength, and a method of using a hydrogen-resistant member.

In addition, another object of the present invention is to provide use of an aluminum-copper alloy having excellent hydrogen embrittlement resistance and tensile strength as hydrogen equipment.

Furthermore, yet another object of the present invention is to provide use of an aluminum-copper alloy having excellent hydrogen embrittlement resistance and tensile strength for manufacturing hydrogen equipment.

### Solution to Problem

As a result of diligent studies to solve the above problems, the present inventor has found that an aluminum-copper alloy having a specific composition has excellent hydrogen embrittlement resistance and tensile strength, and has completed the present invention.

That is, the present invention relates to the following aspects.
<1> A hydrogen-resistant member for hydrogen equipment, the member being made of an aluminum-copper alloy containing Cu as a base material and Al in a second largest amount after Cu.
<2> The hydrogen-resistant member according to <1>, being a cast product.
<3> The hydrogen-resistant member according to <1> or <2>, in which the aluminum-copper alloy contains 5 mass% or more and 15 mass% or less of Al.
<4> The hydrogen-resistant member according to <1> or <2>, in which the aluminum-copper alloy contains 5 mass% or more and 15 mass% or less of Al, 2.5 mass% or more and 5.0 mass% or less of Fe, 1.0 mass% or more and 3.0 mass% or less of Ni, and 0.5 mass% or more and 1.5 mass% or less of Mn, with a balance of Cu (excluding an unavoidable impurity).
<5> The hydrogen-resistant member according to <1> or <2>, in which the aluminum-copper alloy contains 5 mass% or more and 15 mass% or less of Al, 3.0 mass% or more and 6.0 mass% or less of Fe, 3.0 mass% or more and 6.0 mass% or less of Ni, and 0.5 mass% or more and 1.5 mass% or less of Mn, with a balance of Cu (excluding an unavoidable impurity).
<6> The hydrogen-resistant member according to any of <1> to <5>, being a hydrogen-resistant member used in one or more selected from a container, a heat exchanger, a pipe, a valve, a seal portion, and a strainer that are used in a state of contact with hydrogen.
<7> A method of using a hydrogen-resistant member, in which the hydrogen-resistant member described in any of <1> to <6> is used in a state of contact with hydrogen.
<8> Hydrogen equipment including the hydrogen-resistant member described in any of <1> to <6> in at least a portion that is in contact with hydrogen.
<9> The hydrogen equipment according to <8>, being one or more of a container, a heat exchanger, a pipe, a valve, a seal portion, and a strainer that are used in a state of contact with hydrogen.
<10> A hydrogen station including the hydrogen equipment described in <8> or <9>.
<1A> Use of an aluminum-copper alloy as hydrogen equipment, in which the aluminum-copper alloy contains Cu as a base material and Al in a second largest amount after Cu.
<2A> The use according to <1A>, in which the hydrogen equipment is one or more selected from a container, a heat exchanger, a pipe, a valve, a seal portion, and a strainer that are used in a state of contact with hydrogen.
<3A> The use according to <1A> or <2A>, being a cast product.
<4A> The use according to any of <1A> to <3A>, in which the aluminum-copper alloy contains 5 mass% or more and 15 mass% or less of Al.
<5A> The use according to any of <1A> to <3A>, in which the aluminum-copper alloy contains 5 mass% or more and 15 mass% or less of Al, 2.5 mass% or more and 5.0 mass% or less of Fe, 1.0 mass% or more and 3.0 mass% or less of Ni, and 0.5 mass% or more and 1.5 mass% or less of Mn, with a balance of Cu (excluding an unavoidable impurity).
<6A> The use according to any of <1A> to <3A>, in which the aluminum-copper alloy contains 5 mass% or more and 15 mass% or less of Al, 3.0 mass% or more and 6.0 mass% or less of Fe, 3.0 mass% or more and 6.0 mass% or less of Ni, and 0.5 mass% or more and 1.5 mass% or less of Mn, with a balance of Cu (excluding an unavoidable impurity).
<1B> Use of an aluminum-copper alloy for manufacturing hydrogen equipment, in which the aluminum-copper alloy contains Cu as a base material and Al in a second largest amount after Cu.
<2B> The use according to <1B>, in which the hydrogen equipment is one or more selected from a container, a heat exchanger, a pipe, a valve, a seal portion, and a strainer that are used in a state of contact with hydrogen.
<3B> The use according to <1B> or <2B> for manufacturing the hydrogen equipment by casting.
<4B> The use according to any of <1B> to <3B>, in which the aluminum-copper alloy contains 5 mass% or more and 15 mass% or less of Al.
<5B> The use according to any of <1B> to <3B>, in which the aluminum-copper alloy contains 5 mass% or more and 15 mass% or less of Al, 2.5 mass% or more and 5.0 mass% or less of Fe, 1.0 mass% or more and 3.0 mass% or less of Ni, and 0.5 mass% or more and 1.5 mass% or less of Mn, with a balance of Cu (excluding an unavoidable impurity).
<6A> The use according to any of <1B> to <3B>, in which the aluminum-copper alloy contains 5 mass% or more and 15 mass% or less of Al, 3.0 mass% or more and 6.0 mass% or less of Fe, 3.0 mass% or more and 6.0 mass% or less of Ni, and 0.5 mass% or more and 1.5 mass% or less of Mn, with a balance of Cu (excluding an unavoidable impurity).

### Advantageous Effects of Invention

According to the present invention, there are provided the hydrogen-resistant member for hydrogen equipment with excellent hydrogen embrittlement resistance and tensile strength, and the method of using the hydrogen-resistant member.

In addition, according to the present invention, there is provided the use of the aluminum-copper alloy with excellent hydrogen embrittlement resistance and tensile strength as hydrogen equipment.

Furthermore, according to the present invention, there is provided the use of the aluminum-copper alloy with excellent hydrogen embrittlement resistance and tensile strength for manufacturing hydrogen equipment.

### Brief Description of Drawings

FIG. 1 is a schematic diagram of a configuration of a hydrogen station (off-site type) according to an embodiment of the present invention.
FIG. 2 is a schematic view of an example of a pipe.
FIG. 3 is a schematic view of an example of a container.
FIG. 4 is a schematic view of an example of a strainer.
FIG. 5 is a schematic view of an example of an automatic on/off valve (electromagnetic valve).
FIG. 6 is a schematic view of an example of a manual on/off valve.
FIG. 7 is a stress-stroke diagram of a test specimen of Experimental Example 1, in which (a) shows a result of a test in the atmospheric air and (b) shows a result of a test in 100 MPa hydrogen gas.
FIG. 8 is scanning electron microscope (SEM) images of the vicinity of a central portion of a fracture surface of a test specimen of Experimental Example 1 after a tensile test, in which (a) shows a result of a test in the atmospheric air and (b) shows a result of a test in 100 MPa hydrogen gas.
FIG. 9 is a stress-stroke diagram of test specimens of Experimental Examples 1 to 4, in which the solid lines each indicate results of unexposed materials and broken lines each indicate results of hydrogen-exposed materials.

### Reference Signs List

1 Hydrogen station
20 Hydrogen supply source
21 Container
30 Compressor
40 Strainer
50 On/off valve
51 Automatic on/off valve (electromagnetic valve)
52 Manual on/off valve
60 Pressure accumulator
61 Container (for pressure accumulator)
70 Dispenser
80 Fuel cell vehicle
90 Pipe

### Description of Embodiments

Hereinafter, the present invention will be described in detail by showing examples and the like, but the present invention is not limited to the examples and the like below and can be freely modified and implemented without departing from the gist of the present invention. In the present specification, "from ... to ..." or "... to ..." is used as an expression for including numerical values or physical quantities before and after "to". In addition, in the present specification, the expression "A and/or B" includes "only A", "only B", and "both A and B".

In the present specification, "hydrogen equipment" means equipment used in a state of contact with hydrogen to store or transport hydrogen.

In the present specification, a "hydrogen-resistant member (for hydrogen equipment)" means a member that is used in hydrogen equipment used in a hydrogen gas environment and used in a state of contact with hydrogen.

The present invention relates to a hydrogen-resistant member for hydrogen equipment, the member being made of an aluminum-copper alloy containing Cu as a base material and Al in a second largest amount after Cu (the member may be hereinafter referred to as "the hydrogen-resistant member of the present invention").

In addition, the present invention relates to use of an aluminum-copper alloy as hydrogen equipment, in which the aluminum-copper alloy contains Cu as a base material and Al in a second largest amount after Cu (the use may be hereinafter referred to as "the use of the aluminum-copper alloy of the present invention" or "the use of the alloy of the present invention").

Furthermore, the present invention relates to use of an aluminum-copper alloy for manufacturing hydrogen equipment, in which the aluminum-copper alloy contains Cu as a base material and Al in a second largest amount after Cu (the use may be hereinafter referred to as "the use of the aluminum-copper alloy of the present invention for manufacturing" or "the use of the alloy of the present invention for manufacturing").

Hereinafter, when describing a feature common to "the hydrogen-resistant member of the present invention", "the use of the aluminum-copper alloy of the present invention", and "the use of the aluminum-copper alloy of the present invention for manufacturing", they are collectively referred to simply as "the present invention".

In addition, "an aluminum-copper alloy containing Cu as a base material and Al in a second largest amount after Cu (also including a case of a suitable aspect described later) may be referred to as "the aluminum-copper alloy according to the present invention" or "the alloy according to the present invention".

The aluminum-copper alloy according to the present invention is made of an aluminum-copper alloy containing Cu as a base material and Al in a second largest amount after Cu. The aluminum-copper alloy according to the present invention may contain, for example, 5 mass% or more and 15 mass% or less of Al or may contain 7.5 mass% or more and 13 mass% or less of Al.

The aluminum-copper alloy according to the present invention has high hydrogen embrittlement resistance and tensile strength. In addition, this aluminum-copper alloy may have higher mechanical strength. Furthermore, this aluminum-copper alloy may have higher thermal conductivity. Moreover, this aluminum-copper alloy may have higher electrical conductivity. Still more, this aluminum-copper alloy may have higher workability.

The aluminum-copper alloy according to the present invention may contain a metal species other than Cu and Al. Examples of the metal species other than Cu and Al include Fe, Ni, and Mn, and one or more of these may be contained.

In the aluminum-copper alloy according to the present invention, the content of the metal species other than Cu and Al can be appropriately set in a range not to impair the objects of the present invention.

In addition, the aluminum-copper alloy according to the present invention may contain an unavoidable impurity in a range not to impair the objects of the present invention.

Examples of the unavoidable impurity include one or more of P, Sn, Zn, Mg, Cr, Ti, Mo, W, and the like. The amount of this unavoidable impurity is, for example, preferably as small as possible and is preferably 0.1 mass% or less in total.

A suitable composition example of the aluminum-copper alloy according to the present invention contains 5 mass% or more and 15 mass% or less of Al, 2.5 mass% or more and 5.0 mass% or less of Fe, 1.0 mass% or more and 3.0 mass% or less of Ni, 0.5 mass% or more and 1.5 mass% or less of Mn, with a balance of Cu (excluding an unavoidable impurity).

A suitable composition example of the aluminum-copper alloy according to the present invention contains 7.5 mass% or more and 13 mass% or less of Al, 2.5 mass% or more and 5.0 mass% or less of Fe, 1.0 mass% or more and 3.0 mass% or less of Ni, 0.5 mass% or more and 1.5 mass% or less of Mn, with a balance of Cu (excluding an unavoidable impurity).

Another suitable composition example of the aluminum-copper alloy according to the present invention contains 5 mass% or more and 15 mass% or less of Al, 3.0 mass% or more and 6.0 mass% or less of Fe, 3.0 mass% or more and 6.0 mass% or less of Ni, 0.5 mass% or more and 1.5 mass% or less of Mn, with a balance of Cu (excluding an unavoidable impurity).

Yet another suitable composition example of the aluminum-copper alloy according to the present invention contains 5 mass% or more and 15 mass% or less (7.5 mass% or more and 13 mass% or less) of Al, 3.0 mass% or more and 6.0 mass% or less of Fe, 3.0 mass% or more and 6.0 mass% or less of Ni, 0.5 mass% or more and 1.5 mass% or less of Mn, with a balance of Cu (excluding an unavoidable impurity).

The hydrogen equipment as a target of the present invention is used in a state of contact with hydrogen and is not particularly limited as long as it is equipment for storing or transporting hydrogen. Examples of such hydrogen equipment include a container that accommodates hydrogen (also including a pressure accumulator), a heat exchanger that circulates hydrogen for heat exchange, a pipe for hydrogen circulation, a valve connected to a pipe or the like for hydrogen circulation, a seal portion, a valve fitting (part for valve attachment), a pump, and a strainer.

The hydrogen-resistant member of the present invention is suitably a member of, for example, one or more selected from a container (also including a pressure accumulator), a heat exchanger, a pipe, a valve, a seal portion, and a strainer that are used in a state of contact with hydrogen.

In addition, in the use of the alloy of the present invention and the use of the alloy of the present invention for manufacturing, one or more selected from a container (also including a pressure accumulator), a heat exchanger, a pipe, a valve, a seal portion, and a strainer in which the hydrogen equipment is used in a state of contact with hydrogen are suitable targets.

For the use of the aluminum-copper alloy according to the present invention in hydrogen equipment, the lower limit of the pressure of hydrogen in contact with the aluminum-copper alloy according to the present invention is not limited as long as the objects of the present invention are not impaired, and the lower limit is appropriately selected according to the type of target hydrogen equipment, the shape and thickness of the hydrogen-resistant member, and the like.

The lower limit of the pressure of hydrogen is, for example, 0.01 MPa or more, 0.1 MPa or more, 1 MPa or more, 10 MPa or more, 30 MPa or more, 45 MPa or more, 70 MPa or more, or 90 MPa or more.

The upper limit of the hydrogen pressure is not limited either as long as the objects of the present invention are not impaired, and the upper limit is appropriately determined according to the type of target hydrogen equipment, the shape and thickness of the hydrogen-resistant member (aluminum-copper alloy), and the like. The upper limit is, for example, 120 MPa or less, 100 MPa or less, 90 MPa or less, 70 MPa or less, 45 MPa or less, 30 MPa or less, 10 MPa or less, or 1 MPa or less.

In addition, as described later, the hydrogen equipment according to the present invention can be used as equipment of a hydrogen station.

In assuming hydrogen stations and fuel cell vehicles (FCVs), examples of the hydrogen equipment include a container (pressure accumulator) for hydrogen, a heat exchanger, a pipe, a valve, a seal portion, and a strainer. In such applications, the hydrogen equipment according to the present invention is used in a state of contact with medium-pressure hydrogen at 30 MPa or more and less than 70 MPa (e.g., 45 MPa or more and less than 70 MPa) or high-pressure hydrogen at 70 MPa or more and 120 MPa or less (e.g., 70 MPa or more and less than 90 MPa or 90 MPa or more and 120 MPa or less).

The method of using a hydrogen-resistant member of the present invention uses the hydrogen-resistant member made of the aluminum-copper alloy according to the present invention in a state of contact with hydrogen. In particular, in the use as equipment of a hydrogen station, the hydrogen-resistant member is preferably used in a state of contact with medium-pressure hydrogen at 30 MPa or more and less than 70 MPa (e.g., 45 MPa or more and less than 70 MPa) or high-pressure hydrogen at 70 MPa or more and 120 MPa or less (e.g., 70 MPa or more and less than 90 MPa or 90 MPa or more and 120 MPa or less).

The hydrogen-resistant member according to the present invention can be manufactured (formed) by any manufacturing method according to the target hydrogen equipment as long as the objects of the present invention are not impaired.

In addition, the aluminum-copper alloy according to the present invention can be used for target hydrogen equipment and can be manufactured (formed) by any manufacturing method according to the target hydrogen equipment.

For example, the hydrogen-resistant member according to the present invention may be manufactured (formed) by melting metallic raw materials in given ratios corresponding to the aluminum-copper alloy and then, for example, casting (such as gravity casting, die casting, or low-pressure casting), or forging (such as free forging or stamp forging) a copper alloy product (such as a bar material or a plate material) obtained by continuous casting.

In terms of being able to manufacture a hollow member for hydrogen equipment to be used at high pressure or a member with a complicated shape, the hydrogen-resistant member of the present invention is preferably a cast product, and the aluminum-copper alloy according to the present invention is preferably used for casting.

The aluminum-copper alloy according to the present invention preferably has a tensile strength of 600 MPa or more and more preferably 700 MPa or more in hydrogen gas in a slow strain rate tensile (SSRT) test, which exceed the ability value (about 550 MPa) of the tensile strength of a nickel equivalent product. The aluminum-copper alloy according to the present invention has excellent hydrogen embrittlement resistance and high tensile strength. This slow strain rate tensile test is carried out in accordance with ASTM-G-142.

In the slow strain rate tensile test, a test specimen with a fixed form (smooth test specimen) is used in accordance with ASTM-G-142. Usually for a smooth test specimen, the hydrogen sensitivity is evaluated using the relative tensile strength RTS or relative reduction in area RRA obtained by dividing the tensile strength or reduction in area in hydrogen gas by the tensile strength or reduction in area in a reference gas that is not affected by hydrogen. The RTS and the RRA may be determined by dividing the tensile strength and reduction in area of a hydrogen-exposed material by tensile strength and reduction in area of an unexposed material.

In the slow strain rate tensile test of a smooth test specimen, for example, the measurement may be performed at a displacement rate of 0.0015 mm/sec (strain rate of 0.00005/sec). Hydrogen accumulated at a crack tip causes deterioration of the material. Thus, a lower displacement rate allows the test specimen to be more susceptible to hydrogen exposure and the hydrogen brittleness to be more appropriately evaluated.

In assuming 70-MPa grade FCVs and hydrogen stations, this slow strain rate tensile test is carried out at a hydrogen gas pressure of 100 MPa or more. With higher hydrogen gas pressure, the amount of hydrogen penetrating a material increases. Thus, this allows the test specimen to be more susceptible to hydrogen exposure and the hydrogen brittleness to be more appropriately evaluated. When a hydrogen-exposed material is used, the test specimen is subjected to hydrogen exposure at a temperature of 270°C to make the amount of hydrogen in the test specimen uniform at a hydrogen gas pressure of 100 MPa or more.

In the aluminum-copper alloy according to the present invention, when the tensile strength is 600 MPa or more in a slow strain rate tensile test, the RRA is preferably 0.8 or more and more preferably 0.9 or more.

Hereinafter, an embodiment of a hydrogen station will be described in detail based on drawings as an example of hydrogen equipment using the aluminum-copper alloy according to the present invention.

The aluminum-copper alloy according to the present invention is used in a portion that is in contact with hydrogen in one or more pieces of equipment among those (hydrogen equipment) constituting a hydrogen station.

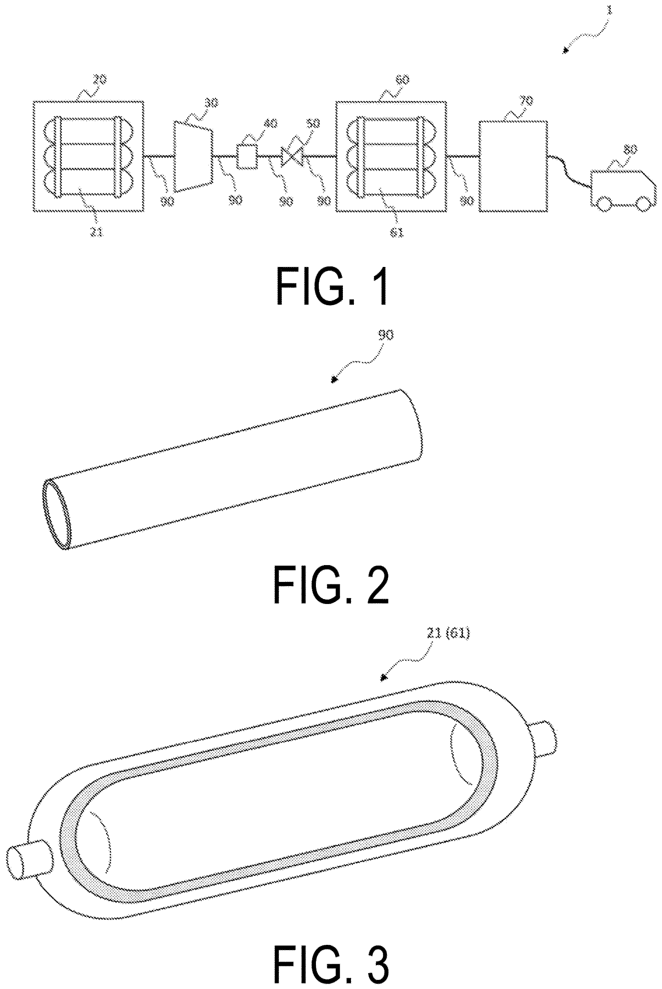

FIG. 1 schematically illustrates an overall configuration of a hydrogen station (off-site type) according to an embodiment of the present invention.

In FIG. 1, a hydrogen station 1 is equipment for supplying hydrogen to a fuel cell vehicle 80 and includes a hydrogen supply source 20, a compressor 30, a strainer 40, an on/off valve 50, a pressure accumulator 60, and a dispenser 70, and these pieces of equipment are connected by pipes 90.

The hydrogen supply source 20 is connected to the pressure accumulator 60 through the compressor 30, the strainer 40, and the on/off valve 50 by pipes 90. The pressure accumulator 60 is connected to the dispenser 70 by a pipe 90, and hydrogen is supplied from the hydrogen supply source 20 to the dispenser 70.

The pipe 90 is a tubular member through which high-pressure hydrogen or intermediate-pressure hydrogen flows. FIG. 2 illustrates a schematic view of an example of the pipe 90. The aluminum-copper alloy according to the present invention may be used in a pipe main body (particularly in a portion to be in contact with hydrogen), a seal portion, and/or the like of the pipe 90.

The hydrogen supply source 20 is equipment filled with hydrogen at high pressure, the hydrogen being produced on a large scale in an industrial plant or the like, and includes a plurality of containers 21 (hydrogen tanks). FIG. 3 illustrates a schematic view of an example of the container 21. The container 21 may be provided with a valve and/or the like, which is not illustrated.

The aluminum-copper alloy according to the present invention can be used in a main body (particularly in a portion to be in contact with hydrogen), a valve, a seal portion, and/or the like of the container 21. In the present embodiment, the containers 21 are filled with hydrogen at a pressure of about 20 MPa.

The hydrogen to be supplied as it is from the hydrogen supply source 20 has a low supply pressure to be supplied to the fuel cell vehicle 80 and thus needs to be pressurized. The compressor 30 is a device for compressing the hydrogen supplied from the hydrogen supply source 20 to a high pressure of, for example, 70 MPa or more. The container 21 may be provided with a seal portion and/or the like.

The aluminum-copper alloy according to the present invention can be used in a main body (particularly in a portion to be in contact with hydrogen), a seal portion, and/or the like of the compressor 30.

The hydrogen compressed to a high pressure passes through the strainer 40 and the on/off valve 50 and is sent to the pressure accumulator 60.

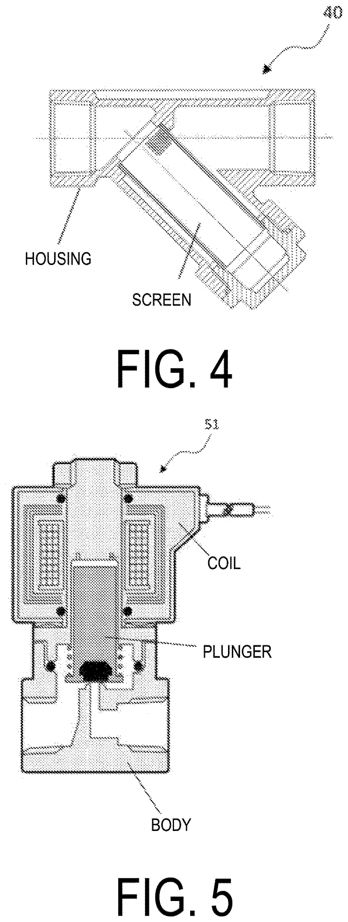

The strainer 40 is provided on the discharge side (secondary side) of the compressor 30 and has a function of removing foreign matter contained in the compressed hydrogen. FIG. 4 illustrates a schematic view of an example of the strainer 40.

During the operation of the hydrogen station 1, fine foreign matter (e.g., metal pieces, dust, and/or the like) may be discharged from the hydrogen supply source 20 and the compressor 30, and the foreign matter may mix into the on/off valve 50, the pressure accumulator 60, and the dispenser 70 provided in the subsequent stages. Mixing of the foreign matter into these pieces of equipment may cause a failure, such as a closing failure of the on/off valve, a pressure drop in the pressure accumulator, or a flow rate adjustment failure of the dispenser. However, installing the strainer 40 on the primary side of these pieces of equipment can prevent the failures.

The aluminum-copper alloy according to the present invention can be used in a main body (particularly in a portion to be in contact with hydrogen), a seal portion, and/or the like of the strainer 40.

The on/off valve 50 is provided on the secondary side of the strainer 40 and opens and closes the flow path of the hydrogen according to the pressure of the hydrogen pressurized by the compressor 30. Specifically, when the pressure in the pressure accumulator 60 is below a predetermined value, the on/off valve 50 is opened together with the operation of the compressor 30, and the hydrogen pressurized by the compressor 30 is supplied to the pressure accumulator 60. Thereafter, when the pressure in the pressure accumulator 60 is increased by the supplied hydrogen to be higher than a predetermined value, the on/off valve 50 is closed and the compressor 30 is stopped.

The aluminum-copper alloy according to the present invention can be used in a main body (particularly in a portion to be in contact with hydrogen), a seal portion, and/or the like of the on/off valve 50.

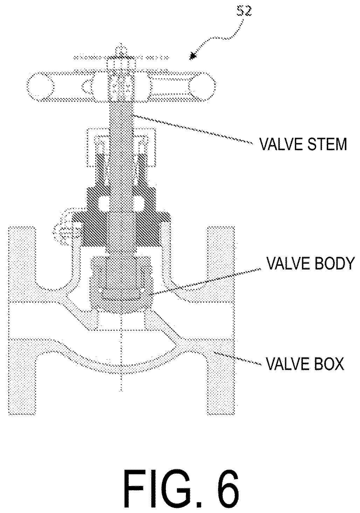

The on/off valve 50 is appropriately selected according to the pressure and flow rate of hydrogen flowing through the on/off valve 50 and may be an automatic on/off valve (electromagnetic valve) 51 or a manual on/off valve 52. FIG. 5 illustrates a schematic view of an example of the automatic on/off valve (electromagnetic valve) 51, and FIG. 6 illustrates a schematic view of an example of the manual on/off valve 52.

The pressure accumulator 60 is composed of a plurality of containers 61 (hydrogen tanks) for storing the high-pressure hydrogen pressurized by the compressor 30 and supplies the accumulated high-pressure hydrogen to the fuel cell vehicle 80 through the dispenser 70 by a differential pressure filling technique. The configuration of the container 61 is the same as that of the container 21 illustrated in FIG. 3.

The aluminum-copper alloy according to the present invention can be used in a main body (particularly in a portion to be in contact with hydrogen), a valve, a seal portion, and/or the like of the container 61. In the present embodiment, the containers 61 are filled with hydrogen at a pressure of 70 MPa or more.

The dispenser 70 is a device connected to the fuel cell vehicle 80 and for supplying hydrogen supplied from the pressure accumulator 60 to the fuel cell vehicle 80 through a filling nozzle. In addition, a precooler (heat exchanger), which is not illustrated, is placed in the dispenser 70 and cools hydrogen supplied from the pressure accumulator 60 to -40°C, for example.

The aluminum-copper alloy according to the present invention can be used in a main body and a precooler (heat exchanger) (particularly in a portion to be in contact with hydrogen), a valve, a seal portion, and/or the like of the dispenser 70.

Although embodiments of the present invention have been described above with reference to the drawings, the embodiments disclosed herein are merely examples for facilitating understanding of the invention and do not limit the present invention unless otherwise specified. In particular, in the embodiments disclosed herein, items that are not explicitly disclosed, such as various parameters, and a dimension, a weight, a volume, and the like of the constituent, do not depart from the scope of usual practice by those skilled in the art, and a value that can be easily assumed by those skilled in the art can be employed.

### Examples

Hereinafter, the present invention will be described more specifically with reference to examples, but the present invention is not limited to these.

### 1. Preparation of Evaluation Sample (Tensile Test Specimen)

An evaluation sample (a smooth round bar test specimen in accordance with ASTM-E8M (length of parallel portion of 30.0 mm and diameter of 6 mm)) was prepared by the following procedure. In addition, an emission spectrometer (model name PDA-5500 available from Shimadzu Corporation) was used for the component analysis.

### Experimental Example 1

First, sand was filled in a wooden mold for a tensile test specimen, then the wooden mold was removed, and a sand mold for a tensile test specimen was obtained. An aluminum-copper (CAC702) ingot was placed in a melting furnace. The temperature was raised to about 1200°C, and molten metal was obtained. The resulting molten metal was sampled, subjected to component analysis, and then poured into the sand mold. After solidification of the molten metal, the sand mold was disassembled, the casting was taken out, and burrs and other unnecessary portions were removed. Then, the resulting casting was machined with a lathe and/or the like according to the dimensions of the test specimen, and a tensile test specimen made of an aluminum-copper alloy of Experimental Example 1 was obtained. The component analysis results of the aluminum-copper alloy of Experimental Example 1 are listed in Table 1.

### Experimental Example 2

A tensile test specimen made of an aluminum-copper alloy of Experimental Example 2 was obtained in the same manner as in Experimental Example 1 except for using molten metal obtained by adding metallic Al to the aluminum-copper (CAC702) ingot. The component analysis results of the aluminum-copper alloy of Experimental Example 2 are also listed in Table 1.

### Experimental Example 3

A tensile test specimen made of an aluminum-copper alloy of Experimental Example 3 was obtained in the same manner as in Experimental Example 1 except for using an aluminum-copper (CAC703) ingot instead of the aluminum-copper (CAC702) ingot. The component analysis results of the aluminum-copper alloy of Experimental Example 3 are also listed in Table 1.

### Experimental Example 4

A tensile test specimen made of an aluminum-copper alloy of Experimental Example 4 was obtained in the same manner as in Experimental Example 3 except for using molten metal obtained by adding metallic Al to the aluminum-copper (CAC703) ingot. The component analysis results of the aluminum-copper alloy of Experimental Example 4 are also listed in Table 1.

The component analysis results of the aluminum-copper alloys of Experimental Examples 1 to 4 are listed in Table 1. The unit is mass%. Japanese Industrial Standards (JIS) specified values of the aluminum-copper CAC702 and CAC703 used as the starting materials are also listed in Table 1.

**[Table 1]**

| | | Casting temperature (°C) | Main components | | | | | Residual components | | | | | | |
|---|---|---|---|---|---|---|---|---|---|---|---|---|---|---|
| | | | Cu | Fe | Ni | Al | Mn | Sn | Pb | Zn | Sb | P | S | Si |
| Experimental Example 1 | CAC702 (Al not added) | 1208 | 84.269 | 3.6328 | 1.7370 | 9.2133 | 0.96179 | 0.01012 | 0.00407 | 0.00000 | 0.14300 | 0.01358 | 0.00000 | 0.01525 |
| Experimental Example 2 | CAC702 (Al added) | 1214 | 83.695 | 3.2795 | 1.6093 | 10.276 | 0.92346 | 0.00965 | 0.00342 | 0.01967 | 0.14517 | 0.01630 | 0.00000 | 0.02297 |
| Experimental Example 3 | CAC703 (Al not added) | 1208 | 81.819 | 3.5799 | 3.9179 | 9.2115 | 0.94884 | 0.01112 | 0.01169 | 0.26856 | 0.15776 | 0.01576 | 0.00000 | 0.05776 |
| Experimental Example 4 | CAC703 (Al added) | 1242 | 80.647 | 3.7628 | 3.8464 | 10.222 | 0.98139 | 0.01302 | 0.01208 | 0.26443 | 0.17049 | 0.01976 | 0.00000 | 0.06341 |
| CAC702 (JIS specified value) | | - | 80.0 to 88.0 | 2.5 to 5.0 | 1.0 to 3.0 | 8.0 to 10.5 | 0.1 to 1.5 | 0.1 | 0.1 | 0.5 | - | - | - | - |
| CAC703 (JIS specified value) | | - | 78.0 to 85.0 | 3.0 to 6.0 | 3.0 to 6.0 | 8.0 to 10.5 | 0.1 to 1.5 | 0.1 | 0.1 | 0.5 | - | - | - | - |

### 2. Evaluation

### Slow Strain Rate Tensile (SSRT) Test

The prepared smooth test specimens were evaluated for tensile properties in a hydrogen environment by a slow strain rate tensile test. The slow strain rate tensile test was carried out in accordance with ASTM-G-142 at a displacement rate of 0.0015 mm/sec (strain rate of 0.00005/sec) for smooth test specimens. The smooth test specimens had a parallel portion length of 30.0 mm and a parallel portion diameter of 6.0 mm.

In the slow strain rate tensile test of the smooth test specimens, the hydrogen embrittlement properties were evaluated by RRA. In addition, fracture surfaces of the test specimens subjected to the SSRT test were observed with a scanning electron microscope (SS-550S available from Shimadzu Corporation).

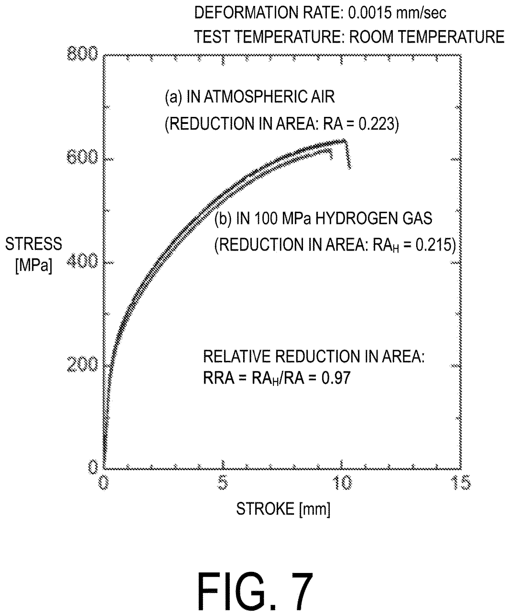

FIG. 7 shows a stress-stroke diagram of the test specimen of Experimental Example 1. In FIG. 7, (a) shows a result of a test in the atmospheric air, and (b) shows a result of a test in 100 MPa hydrogen gas. The reduction in area in the test in the atmospheric air was RA = 0.223, the reduction in area in the test in hydrogen gas was RA_{H} = 0.215, and the relative reduction in area, which is an index of hydrogen sensitivity, was RRA = RA_{H}/RA = 0.97.

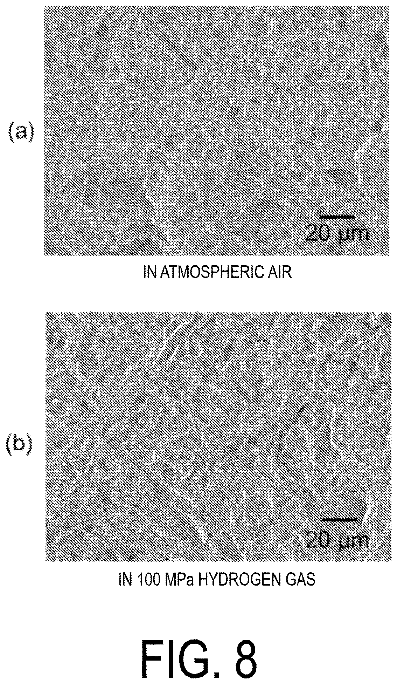

FIG. 8 shows SEM images of a fracture surface in the test specimen of Experimental Example 1, in which (a) shows a result of a test in the atmospheric air and (b) shows a result of a test in 100 MPa hydrogen gas. There was no change in the fracture surface morphology between the test in the atmospheric air and the test in 100 MPa hydrogen gas, and no effect of hydrogen on the tensile fracture of the aluminum-copper alloy was observed. From the relative reduction in area RRA and the fracture surface morphology, the aluminum-copper alloy of Experimental Example 1 had excellent hydrogen embrittlement resistance in a high-pressure hydrogen gas environment.

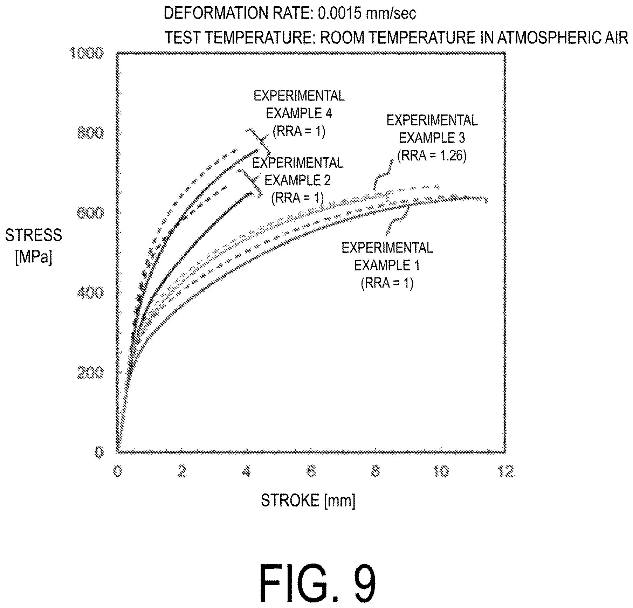

FIG. 9 is a stress-stroke diagram of the test specimens of Experimental Examples 1 to 4, in which the solid lines each indicate results of unexposed materials and broken lines each indicate results of hydrogen-exposed materials. The "hydrogen-exposed material" is a material obtained by exposing a test specimen in high-pressure hydrogen at 100 MPa and 270°C for 200 hours before the test to store hydrogen in the material at a uniform concentration in advance.

As shown in FIG. 9, the test specimens made of the aluminum-copper alloy of Experimental Examples 1 to 4 had a relative reduction in area RRA of 1 or more and all exhibited excellent hydrogen embrittlement resistance.

Although embodiments and examples of the present invention have been described above, the embodiments and examples disclosed herein are exemplification and do not limit the present invention unless otherwise specified.

### Industrial Applicability

The present invention is applicable to technical fields for use in a state of contact with hydrogen, particularly to technical fields using high-pressure hydrogen.

## Claims

1. Use of an aluminum-copper alloy as hydrogen equipment, wherein the aluminum-copper alloy contains Cu as a base material and Al in a second largest amount after Cu.

2. The use according to claim 1, wherein the hydrogen equipment is one or more selected from a container, a heat exchanger, a pipe, a valve, a seal portion, and a strainer that are used in a state of contact with hydrogen.

3. The use according to claim 1 or 2, being a cast product.

4. The use according to any one of claims 1 to 3, wherein the aluminum-copper alloy contains 5 mass% or more and 15 mass% or less of Al.

5. The use according to any one of claims 1 to 3, wherein the aluminum-copper alloy contains 5 mass% or more and 15 mass% or less of Al, 2.5 mass% or more and 5.0 mass% or less of Fe, 1.0 mass% or more and 3.0 mass% or less of Ni, and 0.5 mass% or more and 1.5 mass% or less of Mn, with a balance of Cu (excluding an unavoidable impurity).

6. The use according to any one of claims 1 to 3, wherein the aluminum-copper alloy contains 5 mass% or more and 15 mass% or less of Al, 3.0 mass% or more and 6.0 mass% or less of Fe, 3.0 mass% or more and 6.0 mass% or less of Ni, and 0.5 mass% or more and 1.5 mass% or less of Mn, with a balance of Cu (excluding an unavoidable impurity).

7. A hydrogen-resistant member for hydrogen equipment, the member comprising an aluminum-copper alloy containing Cu as a base material and Al in a second largest amount after Cu.

8. The hydrogen-resistant member according to claim 7, being a cast product.

9. The hydrogen-resistant member according to claim 7 or 8, wherein the aluminum-copper alloy contains 5 mass% or more and 15 mass% or less of Al.

10. The hydrogen-resistant member according to claim 7 or 8, wherein the aluminum-copper alloy contains 5 mass% or more and 15 mass% or less of Al, 2.5 mass% or more and 5.0 mass% or less of Fe, 1.0 mass% or more and 3.0 mass% or less of Ni, and 0.5 mass% or more and 1.5 mass% or less of Mn, with a balance of Cu (excluding an unavoidable impurity).

11. The hydrogen-resistant member according to claim 7 or 8, wherein the aluminum-copper alloy contains 5 mass% or more and 15 mass% or less of Al, 3.0 mass% or more and 6.0 mass% or less of Fe, 3.0 mass% or more and 6.0 mass% or less of Ni, and 0.5 mass% or more and 1.5 mass% or less of Mn, with a balance of Cu (excluding an unavoidable impurity).

12. The hydrogen-resistant member according to any one of claims 7 to 11, being a hydrogen-resistant member used in one or more selected from a container, a heat exchanger, a pipe, a valve, a seal portion, and a strainer that are used in a state of contact with hydrogen.

13. A method of using a hydrogen-resistant member, wherein the hydrogen-resistant member described in any one of claims 7 to 12 is used in a state of contact with hydrogen.

14. Use of an aluminum-copper alloy for manufacturing hydrogen equipment, wherein
the aluminum-copper alloy contains Cu as a base material and Al in a second largest amount after Cu.

15. The use according to claim 1, wherein the hydrogen equipment is one or more selected from a container, a heat exchanger, a pipe, a valve, a seal portion, and a strainer that are used in a state of contact with hydrogen.

16. The use according to claim 14 or 15 for manufacturing the hydrogen equipment by casting.
